# EUROPEAN PATENT SPECIFICATION

(11) **EP 3 499 115 B1**
(45) Date of publication and mention of the grant of the patent: **15.03.2023**
(21) Application number: 18186735.9
(22) Date of filing: 01.08.2018
(51) Int. Cl.: F21S 41/265

(54) **LAMP FOR VEHICLE**
LAMPE FÜR FAHRZEUG
PHARE DE VÉHICULE

(30) Priority: 14.12.2017 KR 20170172199
(43) Date of publication of application: 19.06.2019
(73) Proprietor: SL Corporation, Daegu 702-809 (KR)
(72) Inventor: KIM, Jongwoon, 38470 Gyeongsan-si, Gyeongsanbuk-do (KR); CHOI, Nakjung, 38470 Gyeongsan-si, Gyeongsanbuk-do (KR)
(74) Representative: BCKIP Part mbB

(56) References cited:
- WO-A1-2017/066818
- CN-A- 1 948 821
- DE-A1-102005 013 950
- DE-B3-102016 112 617
- DE-C- 639 774
- US-A1- 2014 092 619

## Description

The present invention relates to a lamp for a vehicle, and more particularly, a lamp for a vehicle, which is capable of forming a beam pattern which is configured as a micro optical system and satisfies light distribution performance requirements.

Generally, a vehicle includes a variety of types of lamps having an illumination function for recognizing an object disposed proximate to the vehicle during low light conditions (e.g., night) and a signaling function for informing other vehicles or road users proximate to the vehicle of a driving state of the vehicle.

For example, a headlamp, a fog lamp, and the like generally have the illumination function. A turn signaling lamp, a tail lamp, a brake lamp, a side marker lamp, and the like generally have the signaling function. Also, installation criteria and specifications for the lamps for a vehicle are regulated by law so that each lamp can adequately perform its function.

Recently, studies for reducing a size of a lamp for a vehicle by using a micro lens having a relatively short focal distance have been actively performed.

Among lamps for a vehicle, a headlamp, which forms a low beam pattern or a high beam pattern to ensure a front field of vision for a driver during nighttime driving, performs an important function for driving safety.

In order to ensure an adequate field of vision by a headlamp, it is necessary to satisfy light distribution performance including a light amount, light efficiency, or the like. A method of satisfying the light distribution performance requirements without adding an additional component to a lamp for a vehicle is required.

The above information disclosed in this section is merely for enhancement of understanding of the background of the invention and therefore it may contain information that does not form the prior art that is already known in this country to a person of ordinary skill in the art.

DE 10 2005 013950 A1 is directed to an arrangement for the homogeneous illumination of an image plane, comprising illumination optics having an array of emitters with a broad emitting characteristic, for example, an arrangement of luminescent diodes (LEDs, OLEDs), an integrator array, and an image-generating element, and the optical axis of an emitter is associated with the mechanical axis of an integrator of the integrator array. At least two microlens arrays are provided for the purpose of achieving an angular homogeneity of the rays exiting from the integrator array on the illuminated area of the image-generating element at the light outlet of the integrator array.

WO 2017/066818 relates to a micro-projection light module for a motor vehicle headlight, comprising at least one light source and at least one projection device which projects the light emitted by the at least one light source into an area in front of the motor vehicle in the form of at least one light distribution. The projection device comprises an input lens system consisting of one, two or more micro-input lenses that are preferably arranged in an array, and an output lens system consisting of one, two or more micro-output lenses that are preferably arranged in an array, wherein to every micro-input lens exactly one micro-output lens is assigned, wherein the micro-input lenses are designed in such a way and/or the micro-input lenses and the micro-output lenses are assigned to each other in such a way that substantially all of the light exiting from a micro-input lens strikes exclusively the micro-output lens assigned to it, and wherein the light bent by the micro-input lenses is projected by the micro-output lenses in an area in front of the motor vehicle in the form of at least one lightdistribution, a first aperture device being disposed between the input lens system and the output lens system, and at least one second aperture device being arranged between the input lens system and the output lens system.

Aspects of the present invention provide a lamp for a vehicle capable of forming a beam pattern, which satisfies the requirements for the light distribution performance, by adjusting combinations and arrangements of micro incident/exit units which form an incident/exit area.

According to some aspects of the present invention, a lamp for a vehicle may include a light source portion, a first lens portion with a plurality of micro incident lenses onto which light generated by the light source portion is incident, and a second lens portion with a plurality of micro exit lenses disposed in front of the plurality of micro incident lenses. Also, the lamp may form a beam pattern using a combination of one or more micro incident/exit units. Here, each of the micro incident/exit units may include one cylinder lens which extends in a first direction and a plurality of corresponding lenses corresponding to the one cylinder lens, and any one of the micro incident lens and the micro exit lens may be the cylinder lens and the other may be the corresponding lens.

The plurality of corresponding lenses may be arranged in the direction in which the cylinder extends. Here, when the cylinder lens is the micro incident lens, light which exits from the cylinder lens may be incident onto the corresponding lens. Conversely, when the cylinder lens is the micro exit lens, light which exits from the corresponding lens may exit toward the cylinder lens.

Light which exits from the lamp may form a beam pattern which is widened in the first direction and/or a beam pattern which is narrowed in a second direction perpendicular to the first direction.

As the cylinder lens is the micro incident lens, an incident surface thereof includes, according to the invention, a refraction portion which is bent at both ends of the first direction. In particular, the light which is incident onto the refraction portion may be narrowed in the first direction.

In some exemplary embodiments, the micro incident/exit units of a same configuration, in which the one cylinder lens is combined with the same number of the corresponding lenses, may be arranged adjacently.

The lamp may include first micro incident/exit units in which the one cylinder lens is combined with the two corresponding lenses. Here, the first micro incident/exit units may be arranged in an optical axis area to increase a brightness of a high illuminance area of the beam pattern.

The micro incident/exit units, in which the one cylinder lens is combined with the three or more corresponding lenses, may be arranged outside an optical axis area and may form a spread area of the beam pattern.

In the micro incident/exit units, the one cylinder lens may be combined with N number of the corresponding lenses. The micro incident/exit units may include a first micro incident/exit unit whose N number is 2, a second micro incident/exit unit whose N number is 3, and a third micro incident/exit unit whose N number is 4.

The first micro incident/exit units may be arranged in an optical axis area to increase a brightness of a high illuminance area of the beam pattern. The second micro incident/exit units may be symmetrically arranged in a second direction perpendicular to the first direction with respect to an optical axis to form a part of a spread area of the beam pattern. The third micro incident/exit units may be symmetrically arranged in the first direction with respect to an optical axis to form a part of a spread area of the beam pattern.

In the first lens portion, the plurality of micro incident lenses may be formed on a surface of a first transmission portion transmitting light, which faces the light source portion. In the second lens portion, the plurality of micro exit lenses may be formed on a surface of a second light transmission portion transmitting light, from which light exits. The first light transmission portion and the second light transmission portion may be disposed to abut each other.

The lamp may further include a shielding portion with a plurality of shields disposed on rear focal points of the plurality of micro exit lenses to obstruct a portion of light which is incident onto the plurality of micro exit lenses. Particularly, the plurality of shields may be disposed on and fixed to a surface of the second light transmission portion which faces the first light transmission portion.

The first light transmission portion may have a thickness corresponding to a focal distance of the micro incident lens, and the second light transmission portion may have a thickness corresponding to a focal distance of the micro exit lens.

Further, the light source portion may include a light source and a light guide portion configured to guide the light generated by the light source to the first lens portion by adjusting an optical path of the light to be parallel to an optical axis of the light source. Also, the light guide portion may be one of a Fresnel lens and a collimator lens.

In the lamp, at least two of the micro incident/exit units may have different numbers of the plurality of corresponding lenses that correspond to the one cylinder lens.

Details of other examples are included in a detailed description and drawings.

The above and other aspects and features of the present invention will become more apparent by describing in detail exemplary embodiments thereof with reference to the attached drawings, in which:
FIGS. 1 and 2 are perspective views of a lamp for a vehicle according to some exemplary embodiments of the present invention;
FIG. 3 is a side view of the lamp for the vehicle according to some exemplary embodiments of the present invention;
FIGS. 4 and 5 are exploded-perspective views of the lamp for the vehicle according to some exemplary embodiments of the present invention;
FIGS. 6 to 8 are views illustrating first to third micro incident/exit units and light-proceeding paths with respect to a first direction according to some exemplary embodiments of the present invention;
FIG. 9 is a view illustrating light-proceeding paths of the micro incident/exit units with respect to a second direction according to some exemplary embodiments of the present invention;
FIG. 10 is a view illustrating an example of a low beam pattern having a cut-off line in which left and right top ends have different heights on the basis of a line V-V;
FIG. 11A is a view illustrating a combination and arrangement of the first to third micro incident/exit units which form an incident/exit area of the lamp according to some exemplary embodiments of the present invention, viewed from a direction in which micro incident lenses are formed;
FIGS. 11B to 11D are views illustrating a configuration in which only the first to third micro incident/exit units are arranged in the incident/exit area of the lamp according to some exemplary embodiments of the present invention, viewed from a direction in which the micro incident lenses are formed;
FIGS. 12 to 14 are views illustrating first to third micro incident/exit units and light-proceeding paths with respect to a first direction according to other exemplary embodiments which do not form part of the present invention; and
FIG. 15 is a view illustrating a combination and arrangement of the first to third micro incident/exit units which form an incident/exit area of the lamp according to other exemplary embodiments of the present invention, from a direction in which micro exit lenses are formed.

Advantages and features of the present invention and a method of achieving the same will become apparent with reference to the attached drawings and embodiments described below in detail. However, the present invention is not limited to the embodiments described below and may be embodied with a variety of different modifications. The embodiments are merely provided to allow one of ordinary skill in the art to completely understand the scope of the present invention that is defined by the scope of the claims. Throughout the specification, like reference numerals refer to like elements.

Accordingly, in some embodiments, well-known operations of a process, well-known structures, and well-known technologies will be not described in detail to avoid obscuring of understanding the present invention.

The terms used herein are for explaining embodiments but are not intended to limit the present invention.

Throughout the specification, unless particularly defined otherwise, singular forms include plural forms. The terms "comprises" and/or "comprising" are used herein as meanings which do not exclude presence or addition of one or more other components, stages, and/or operations in addition to stated components, stages, and/or operations. Also, "and/or" includes each and one or more combinations of stated items.

Also, embodiments disclosed herein will be described with reference to perspective views, cross-sectional views, side views, and/or schematic diagrams which are exemplary views of the present invention. Also, throughout the drawings of the present invention, components may be slightly exaggerated or reduced in consideration of convenience of description.

Hereafter, a lamp 1 for a vehicle according to some exemplary embodiments of the present invention will be described with reference to the drawings.

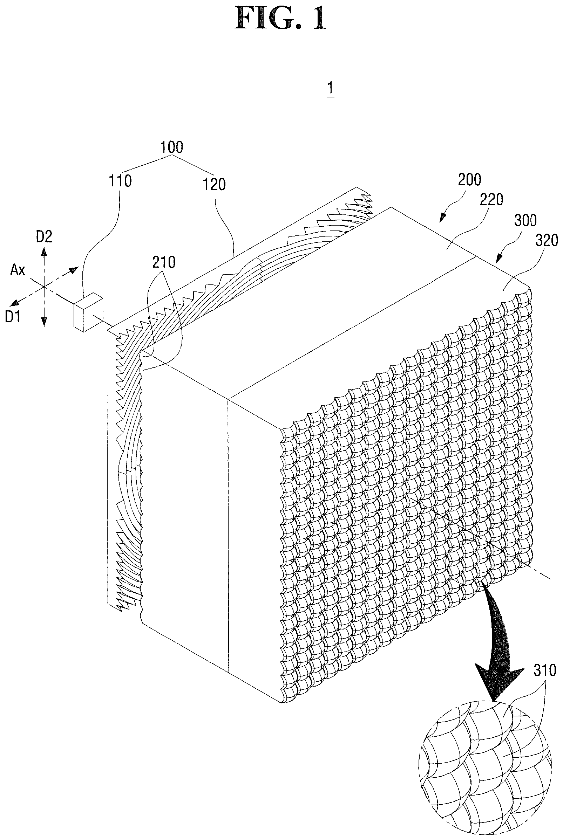

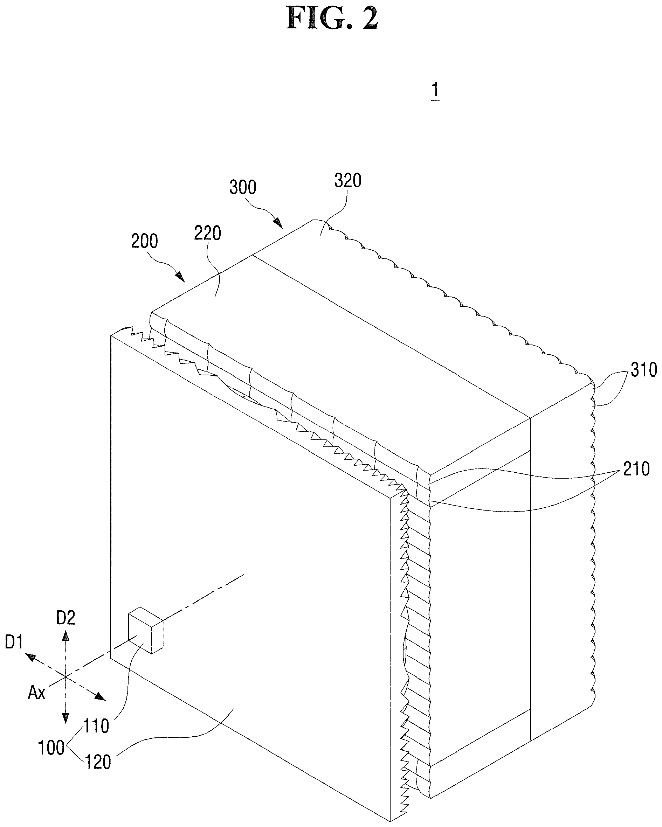

FIGS. 1 and 2 are perspective views of the lamp 1 according to some exemplary embodiments of the present invention,

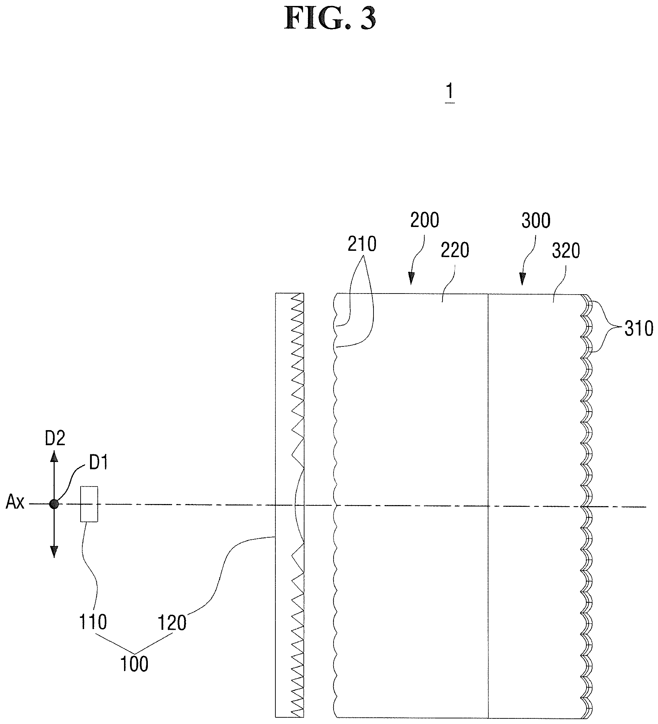

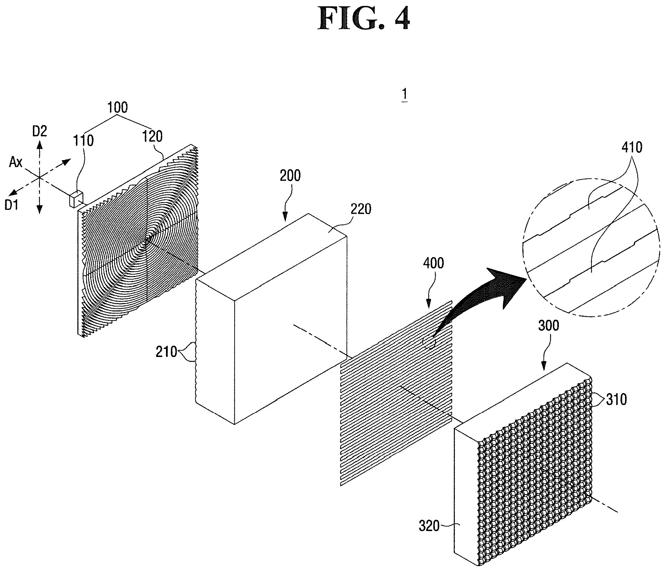

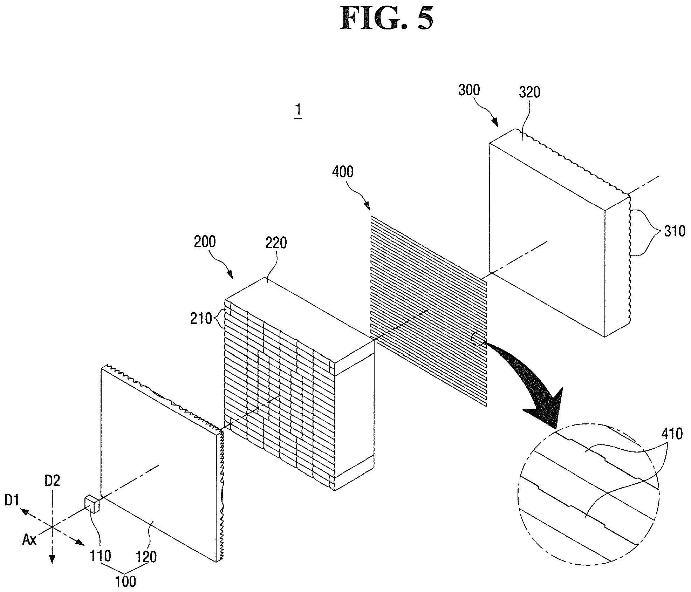

FIG. 3 is a side view of the lamp 1 according to some exemplary embodiments of the present invention, and FIGS. 4 and 5 are exploded perspective views of the lamp 1 according to some exemplary embodiments of the present invention.

Referring to FIGS. 1 to 5, the lamp 1 according to some exemplary embodiments of the present invention may include a light source portion 100, a first lens portion 200, a second lens portion 300, and a shielding portion 400.

In the exemplary embodiments of the present invention, the lamp 1 may be a headlamp for ensuring a front field of vision in a vehicle when the vehicle is traveling during low light conditions (e.g., night) by emitting light in a driving direction or through a dark place such as a tunnel and the like, but is not limited thereto. The lamp 1 may be used not only as a headlamp, but also as any of a variety of lamps installed in a vehicle such as a tail lamp, a brake lamp, a fog lamp, a position lamp, a turn-signal lamp, a daytime running lamp, a backup lamp, and the like.

Additionally, the exemplary embodiments of the present invention will be described regarding the lamp 1 as a headlamp that forms a low beam pattern having a certain cut-off line CL to prevent a driver of a vehicle in front or a vehicle approaching in an opposite lane from being blinded, but it is merely an example for aiding in understanding the present invention.

Therefore, the present invention is not limited thereto, and a variety of beam patterns may be formed according to use of the lamp 1 according to some exemplary embodiments of the present invention.

Components included in the lamp 1 according to some exemplary embodiments of the present invention may be added, deleted, or changed based on each of the beam patterns.

The light source portion 100 may include a light source 110 and a light guide portion 120.

In the exemplary embodiments of the present invention, a semiconductor light emitting diode (LED) such as an LED lamp may be used as the light source 110. However, the light source 110 is not limited thereto, and a variety of types of light sources such as a bulb and the like may be used as the light source 110 in addition to the semiconductor LED.

The light guide portion 120 may guide light generated by the light source 110 at a certain light irradiation angle, to the first lens portion 200 by adjusting an optical path of the light to be parallel to an optical axis Ax of the light source 110. The optical axis Ax of the light source 110 may represent a line which passes a center of a light emitting surface of the light source 110 perpendicularly.

The light guide portion 120 may reduce the light loss by allowing the light generated by the light source 110 to be incident onto the first lens portion 200 as much as possible and allow the light which is incident onto the first lens portion 200 to be uniformly incident onto the first lens portion 200 overall by adjusting the optical path of the light to be parallel to the optical axis Ax of the light source 110.

In the exemplary embodiments of the present invention, a Fresnel lens configured as a lens having a shape of plural rings may be used as the light guide portion 120 to reduce a thickness thereof and to adjust the optical path of the light generated by the light source 110 to be parallel to the optical axis Ax of the light source 110. However, the present invention is not limited thereto, and a variety of types of lenses such as a collimator lens and the like capable of adjusting the optical path of the light generated by the light source 110 may be used as the light guide portion 120.

The first lens portion 200 may include a plurality of micro incident lenses 210 onto which the light generated by the light source portion 100 is incident. Incident surfaces of the plurality of micro incident lenses 210 may collectively form an incident surface of the first lens portion 200, and exit surfaces of the plurality of micro incident lenses 210 may collectively form an exit surface of the first lens portion 200.

In the exemplary embodiments of the present invention, the plurality of micro incident lenses 210 may be formed on a surface of a first light transmission portion 220 that is made of a light transmission material, which faces the light source portion 100. However, the first light transmission portion 220 is intended to form the first lens portion 200 and the second lens portion 300 as a single body and may be omitted when the first lens portion 200 and the second lens portion 300 are formed separately.

The second lens portion 300 may include a plurality of micro exit lenses 310. Incident surfaces of the plurality of micro exit lenses 310 may collectively form an incident surface of the second lens portion 300, and exit surfaces of the plurality of micro exit lenses 310 may collectively form an exit surface of the second lens portion 300.

In the exemplary embodiments of the present invention, the plurality of micro exit lenses 310 may be formed on a surface of a second light transmission portion 320 that is made of a light transmission material from which light exits. However, the second light transmission portion 320 may be omitted for similar reasons as described above in regards to the first lens portion 200.

Meanwhile, the lamp 1 according to some exemplary embodiments of the present invention may include a combination of one or more micro incident/exit units and may form a beam pattern. In particular, each of the micro incident/exit units may include one semicylinder lens (hereinafter, referred to as "a cylinder lens") and a plurality of corresponding lenses.

In other words, the micro incident/exit unit may include one cylinder lens and a plurality of corresponding lenses. In particular, any one of the micro incident lens 210 and the micro exit lens 310 may be the cylinder lens and the other may be the corresponding lens.

Accordingly, in the cylinder lens and the plurality of corresponding lenses, which form one micro incident/exit unit, when the cylinder lens is the micro incident lens 210, the light which exits from the cylinder lens may be incident onto the micro exit lens 310 which is the corresponding lens. On the other hand, when the cylinder lens is the micro exit lens 310, the light may exit toward the cylinder lens from the corresponding lens, which is the micro incident lens 210.

The cylinder lens may have a semicircular cross section and may extend in length in one direction to have an overall shape obtained by cutting a cylinder in half along a longitudinal direction. The cylinder lens may include one or a plurality of arranged lens having a semicylindrical shape which extends in one direction, and a focal line which connects focal points F may be formed along the direction in which the length of the cylinder lens extends. Meanwhile, a curved surface of the cylinder lens may be a spherical surface or an aspherical surface such as a parabolic surface or a hyperboloid which deviates from a spherical surface.

Also, in the exemplary embodiments of the present invention, a first direction D1 in which the cylinder lens extends lengthwise may be a horizontal direction which is parallel to a line H-H on a screen toward which a beam pattern is emitted, and a second direction D2 may be a vertical direction perpendicular to the optical axis Ax and the first direction D1. However, the first direction D1 and the second direction D2 may be varied depending on the directions in which the lamp 1 is disposed and the cylinder lens extends.

In the exemplary embodiments of the present invention, each of the plurality of micro incident lenses 210 may be the cylinder lens having a semicylindrical shape which extends lengthwise in the first direction D1, and the plurality of micro incident lenses 210 may be arranged in the second direction D2 which is perpendicular to the first direction D1.

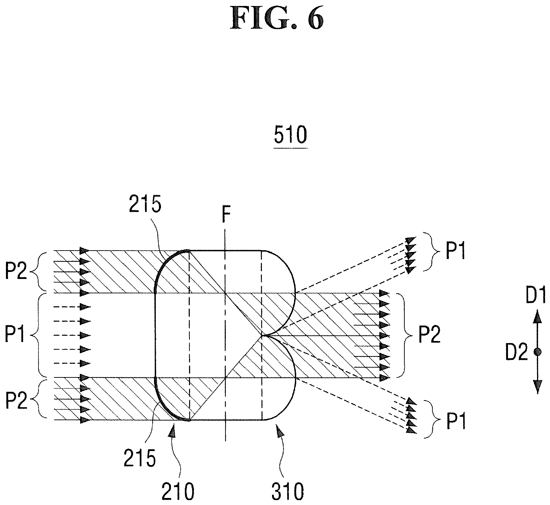

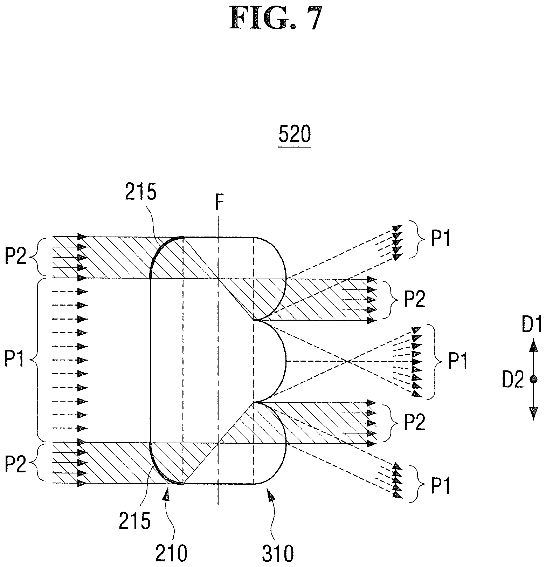

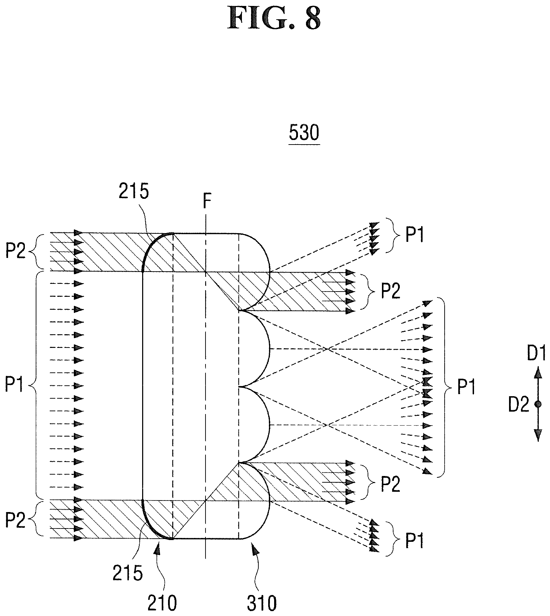

FIGS. 6 to 8 are views illustrating first to third micro incident/exit units 510, 520, and 530 and light-proceeding paths with respect to the first direction D1 according to some exemplary embodiments of the present invention.

As described above, each of the plurality of micro incident lenses 210 may be the cylinder lens having a semicylindrical shape which extends in the first direction D1, and one or more micro exit lenses 310 corresponding to the one cylinder lens may be arranged in the first direction D1 in which the cylinder lens extends.

In other words, the micro incident/exit unit according to some exemplary embodiments of the present invention may include N number of corresponding lenses arranged in the first direction D1 per one cylinder lens. Here, the micro incident lenses 210 or the micro exit lenses 310 may be combined, with N being a natural number.

Referring to FIGS. 6 to 8, according to some exemplary embodiments of the present invention, the first micro incident/exit unit 510 may include one cylinder lens combined with two micro exit lenses 310, the second micro incident/exit unit 520 may include one cylinder lens combined with three micro exit lenses 310, and the third micro incident/exit unit 530 may include one cylinder lens combined with four micro exit lenses 310.

Referring to FIGS. 6 to 8, in the micro incident/exit unit according to some exemplary embodiments of the present invention, the light that is generated by the light source portion 100 and is incident onto and exits from the cylinder lens may be incident onto one or more micro exit lenses 310 combined with the cylinder lens.

In particular, a portion of the light which is incident onto or exits from the micro exit lens 310 may form a beam pattern which is widened in the first direction D1 in which the cylinder lens extends. Specifically, referring to FIGS. 6 to 8 for a first beam pattern P1 shown therein, the first beam pattern P1 which is incident from the light guide portion 120 in parallel may be refracted from an exit surface of each of the micro exit lenses 310 toward a front focal point of each of the micro exit lenses 310 and subsequently widened in the first direction D 1.

Here, the front may be a direction in which light is emitted by the lamp 1 according to some exemplary embodiments of the present invention and may vary based on a position or a direction in which the lamp 1 according to some exemplary embodiments of the present disclosure is installed.

As described above, a beam pattern in which the light which is incident onto the cylinder lens may be widened to be parallel to the line H-H of a low beam pattern LP such that it has an effect of reducing costs of configuring the micro incident lens 210 and the micro exit lens 310, which may be arranged to be parallel to the line H-H, in comparison to a case of including general micro incident lenses.

In addition, a portion of the light which is incident onto and exits from the micro exit lens 310 may form a beam pattern which is narrowed in the first direction D1. In detail, referring to FIGS. 6 to 8 for the first to third micro incident/exit units 510, 520, and 530 shown therein, an incident surface of the cylinder lens may include a refraction portion 215 which refracts a path of incident light, which is incident to be parallel to the optical axis Ax, in the first direction D1.

The refraction portion 215 is, according to the invention, bent at the incident surface of the cylinder lens toward both ends of the first direction D1 to be formed as an aspherical surface. Referring to FIGS. 6 to 8 for a second beam pattern P2 shown therein, the second beam pattern P2 which is incident from the light guide portion 120 in parallel may have a path refracted toward a rear focal point F of the micro exit lens 310 opposite the refraction portion 215 in the first direction D1.

The second beam pattern P2, which is refracted and proceeds, may exit from the exit surface of the micro exit lens 310 in parallel and may be narrowed more in the first direction D1 than an original incident area of the cylinder lens.

Here, the refraction portion 215 of the cylinder lens according to some exemplary embodiments of the present invention may be formed to allow the second beam pattern P2 which is incident in parallel onto the refraction portion 215 to have a focal point F and a curvature with a path refracted in the first direction D1 toward the rear focal point F of the micro exit lens 310.

Further, any configuration may be applied in which a front focal point F of the micro incident lens 210 and the rear focal point F of the micro exit lens 310 according to some exemplary embodiments of the present invention may be formed in positions corresponding to each other, and the second beam pattern P2 may form a beam pattern which is narrowed in the first direction D1 through the refraction portion 215.

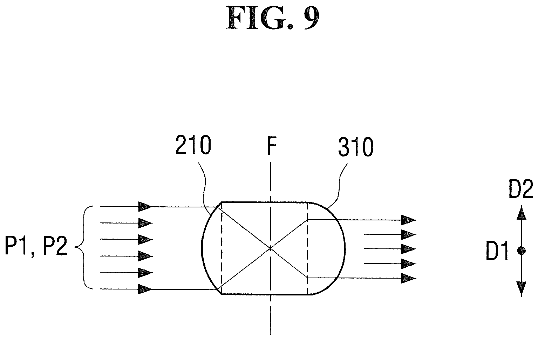

Meanwhile, the light which is incident onto and exits from the cylinder lens may form a beam pattern which is narrowed in the second direction D2. FIG. 9 is a view illustrating light-proceeding paths of the micro incident/exit unit with respect to the second direction D2 according to some exemplary embodiments of the present invention.

Referring to FIG. 9, the micro incident lens 210 according to some exemplary embodiments of the present invention may be the cylinder lens which extends in the first direction D1 such that a semicircular-shaped cross section is formed in the second direction D2.

Accordingly, the first and second beam patterns P1 and P2, which are incident onto in parallel the optical axis Ax from the light guide portion 120, may be refracted and proceed in the second direction D2 toward a front focal point F of the cylinder lens on the incident surface of the cylinder lens and may exit to be parallel from the exit surface of the micro exit lens 310.

In particular, focal distances of the cylinder lens and the micro exit lens 310 or curvatures of the cylinder lens and the micro exit lens 310 with respect to the second direction D2 may be formed to be the same. However, when the focal distance of the cylinder lens is longer than the focal distance of the micro exit lens 310 or the curvature of the micro exit lens 310 is formed to be relatively greater than that of the cylinder lens, the first and second beam patterns P1 and P2 may form a beam pattern which is narrowed in the second direction D2.

Accordingly, the lamp 1, according to some exemplary embodiments of the present invention, may form a beam pattern which is widened in the first direction D1 and narrowed in the second direction D2 through a combination of the first to third micro incident/exit units 510, 520, and 530.

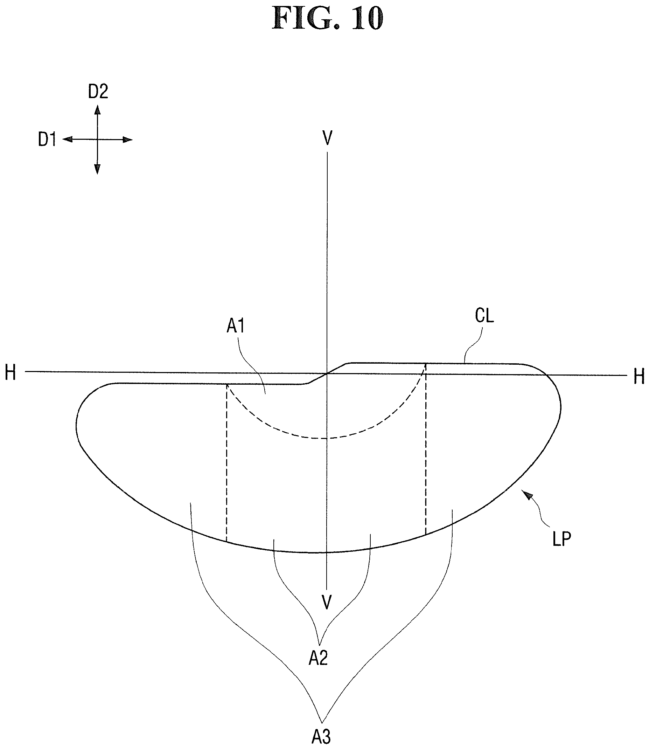

FIG. 10 is a view illustrating an example of a low beam pattern LP having a cut-off line CL in which left and right top ends have different heights with respect to a line V-V. Referring to FIG. 10, particularly, in the case of the low beam pattern LP formed by a headlamp, it may be necessary to form a beam pattern in which an overall shape of the beam pattern for providing a driver with an adequate field of vision is widened to be parallel to the line H-H which horizontally passes a front focal point of the headlamp.

Further, in a high illuminance area A1 disposed to be adjacent to the cut-off line CL, relatively high brightness may be necessary to provide a driver with distant visibility for safe driving during nighttime driving. In spread areas A2 and A3, relatively low brightness may be necessary to provide a wide visibility angle (e.g., range) with respect to a short distance.

The lamp 1 according to some exemplary embodiments of the present invention may include the combination of the first to third micro incident/exit units with respect to the incident/exit area such that an optimal low beam pattern LP which satisfies light distribution performance requirements in consideration of light distribution properties of the above-described low beam pattern LP is formed.

In particular, each of the first to third micro incident/exit units 510, 520, and 530 according to some exemplary embodiments of the present invention may include a combination of one cylinder lens, which extends in the first direction parallel to the line H-H, and the plurality of micro exit lenses 310 arranged in the direction in which the cylinder lens extends.

Specifically, the lamp 1 according to some exemplary embodiments of the present invention may form the beam pattern which satisfies the light distribution performance requirements by adjusting the combination and arrangement of the first to third micro incident/exit units 510, 520, and 530, which form the incident/exit area. Here, the light distribution performance of the formed beam pattern may include brightness (e.g., illuminance, luminance, or luminous intensity, etc.), beam width, light efficiency, and the like of a particular region of the beam pattern.

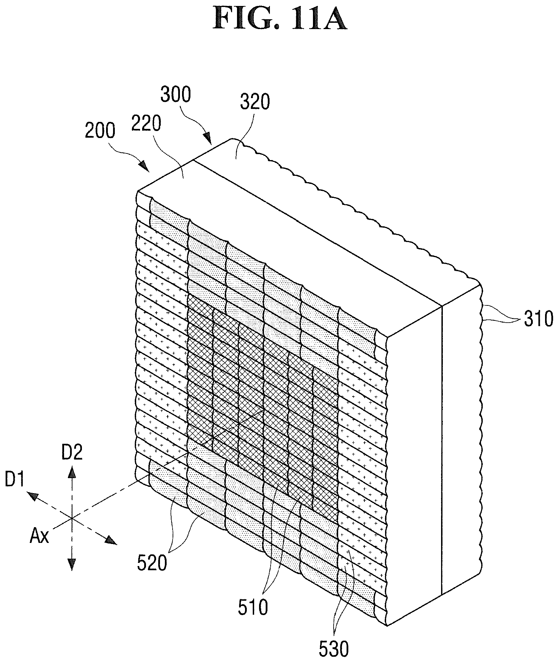

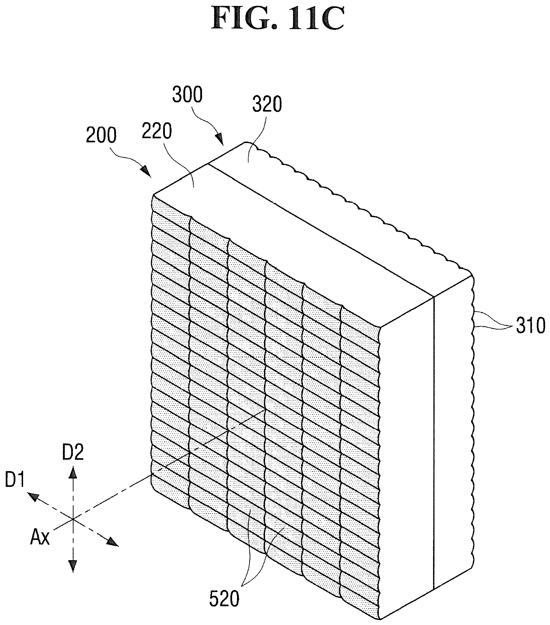

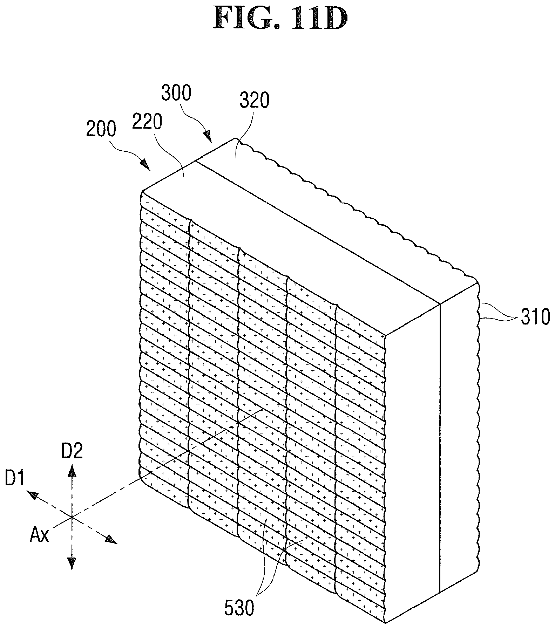

FIG. 11A is a view illustrating the combination and arrangement of the first to third micro incident/exit units 510, 520, and 530, which form the incident/exit area of the lamp 1 according to some exemplary embodiments of the present invention, viewed from a direction in which the micro incident lenses 210 are formed.

Referring to FIG. 11A, the lamp 1 according to some exemplary embodiments of the present invention may form an optimal low beam pattern LP when the micro incident/exit units 510 are arranged in an optical axis area, the second micro incident/exit units 520 are symmetrically arranged in the second direction D2 with respect to the optical axis Ax, and the third micro incident/exit units 530 are symmetrically arranged in the first direction D1 with respect to the optical axis Ax.

As described above, since the first direction D1 of the first to third micro incident/exit units 510, 520, and 530 may be disposed to be parallel to the line H-H, the beam pattern which is widened to be parallel to the horizontal line H-H such as the low beam pattern LP shown in FIG. 10 may be formed.

More particularly, since the high illuminance area A1 located to be adjacent to the cut-off line CL may be disposed to be adjacent to the optical axis Ax and require relatively high brightness, the first micro incident/exit units 510, which form a beam pattern with relatively high brightness and a narrow beam width, may be arranged in the optical axis area.

In the spread areas A2 and A3, since relatively low brightness is required and it may be necessary to form a wide beam width, the second and third micro incident/exit units 520 and 530 which have relatively low brightness and form a beam pattern with a wide beam width may be combined and arranged.

Referring to FIG. 10, since a first spread area A2 may be formed to have a relatively narrow beam width than that of the beam pattern of a second spread area A3, the second micro incident/exit units 520 which form a beam pattern with a relatively narrow beam width may be arranged in the first spread area A2 and the third micro incident/exit units 530 which form a relatively wider beam width may be arranged in the second spread area A3.

In other words, compared to when the cylinder lenses which extend in length in the first direction are simply arranged in the second direction D2, when an incident/exit surface is configured to be divided by the combination and arrangement of the first to third micro incident/exit units 510, 520, and 530 as in the lamp 1 according to some exemplary embodiments of the present invention, the beam pattern having a more condensed and higher brightness may be formed in the high illuminance area A1 and an optimal low beam pattern LP which is diffused with a relatively wider beam width and lower brightness may be formed in the spread areas A2 and A3.

FIGS. 11A to 11D are views illustrating configurations in which only the first to third micro incident/exit units 510, 520, and 530 are arranged in the incident/exit area of the lamp 1 according to some exemplary embodiments of the present invention, viewed from the direction in which the micro incident lenses 210 are formed.

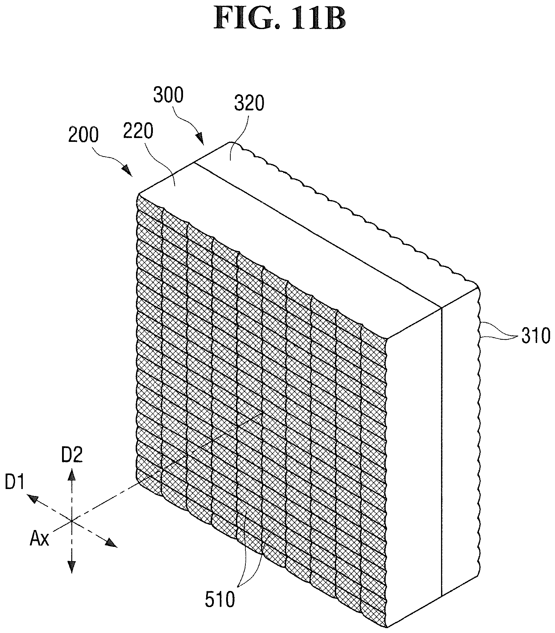

Referring to FIGS. 11B to 11D, the incident/exit area of the lamp 1 according to some exemplary embodiments of the present invention may be configured using exclusively the first micro incident/exit units 510, the second micro incident/exit units 520, or the third micro incident/exit units 530. FIGS. 11B to 11D are merely examples, and the combination and arrangement of the micro incident/exit units which form the incident/exit area of the lamp 1 according to some exemplary embodiments of the present invention are not limited thereto.

Although the above-described micro incident/exit units according to some exemplary embodiments of the present invention have been described with an example in which each of the plurality of micro incident lenses 210 is the cylinder lens, on the other hand, according to other exemplary embodiments of the present invention, each of the plurality of micro exit lenses 310 may be a semicylindrical cylinder lens which extends lengthwise in the first direction D1 and the plurality of micro exit lenses 310 may be arranged in the second direction D2 perpendicular to the first direction D1. In other words, according to other exemplary embodiments of the present invention, in the first to third micro incident/exit units 510, 520, and 530, the plurality of micro incident lenses 210 arranged in the first direction D1 may be combined with the cylinder lenses which extend in length in the first direction D1 corresponding thereto as the micro exit lenses 310.

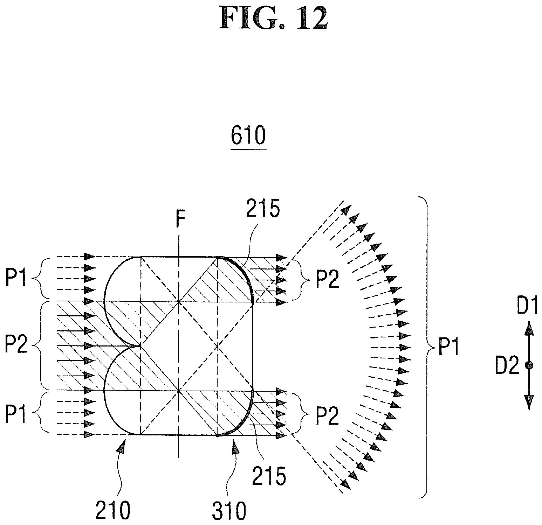

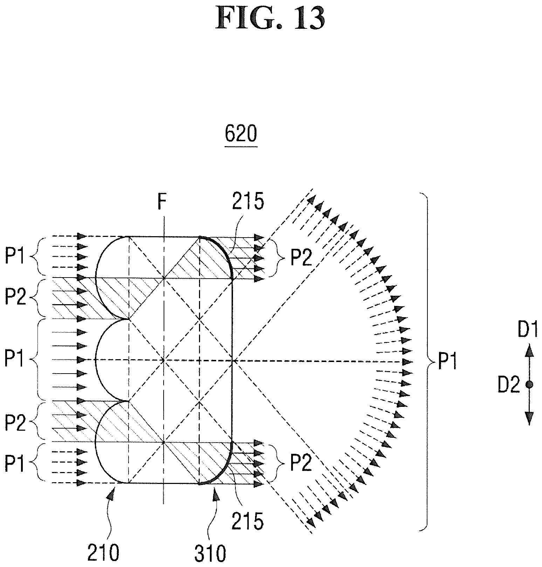

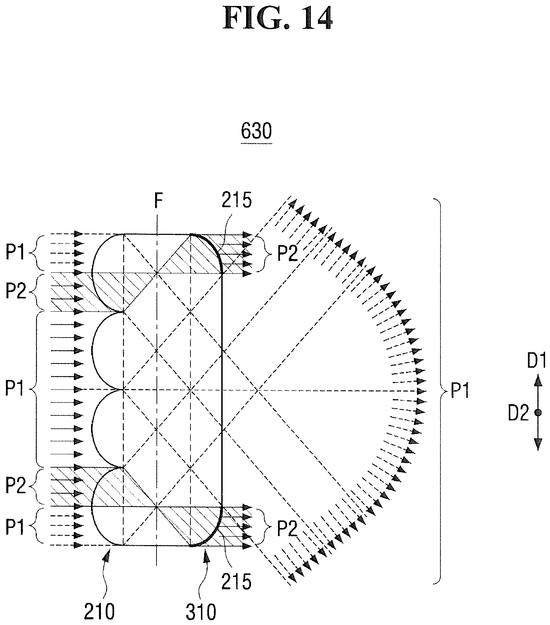

FIGS. 12 to 14 are views illustrating first to third micro incident/exit units 610, 620, and 630 and light-proceeding paths with respect to the first direction D1 according to other exemplary embodiments which do not form part of the present invention. Referring to FIGS. 12 to 14, the first micro incident/exit unit 610 may include two micro incident lenses 210 combined with one cylinder lens, the second micro incident/exit unit 620 may include three micro incident lenses 210 combined with one cylinder lens, and the third micro incident/exit unit 630 may include four micro incident lenses 210 combined with one cylinder lens, in which the cylinder lenses may perform as the micro exit lenses 310.

Referring to FIGS. 12 to 14, in the micro incident/exit units 610, 620, and 630, the light which is generated by the light source portion 100 and is incident onto and exits from the plurality of micro incident lenses 210 may be incident onto the one cylinder lens combined as the micro exit lens 310 with the plurality of micro incident lenses 210.

As described above, the light which is incident onto and exits from the cylinder lens may form a beam pattern which is widened in the first direction D1 and may form a beam pattern which is narrowed in the second direction D2.

Referring to FIGS. 12 to 14 for a first beam pattern P1 shown therein, the first beam pattern P1 which is incident from the light guide portion 120 in parallel may be refracted from an incident surface of each of the micro incident lenses 210 toward a front focal point of each of the micro incident lenses 210, may exit from an exit surface of the cylinder lens which is the micro exit lens 310, and may be subsequently widened in the first direction D1.

Further, the cylinder lens, as the micro exit lens 310, may include the refraction portion 215 which is bent toward both ends of the first direction D1 and formed as an aspherical surface at the exit surface of the cylinder lens.

Referring to FIGS. 12 to 14, the refraction portion 215 may refract a path of a second beam pattern P2 which is a portion of light which is incident from the micro incident lens 210 from the exit surface of the cylinder lens toward the first direction D1 such that the second beam pattern P2 may be refracted and proceed to exit to be parallel to the optical axis Ax.

As described above, the light which is incident onto and exits from the cylinder lens may form the beam pattern which is narrowed in the second direction D2. Referring back to FIG. 9, according to other exemplary embodiments which do not form part of the present invention, since the micro exit lens 310 may be the cylinder lens which extends in the first direction D1, a semicircular cross section may be formed in the second direction D2 and the first and second beam patterns P1 and P2 which are incident from the micro incident lens 210 through the front focal point F thereof may form a beam pattern which is narrowed at the exit surface of the cylinder lens in the second direction D2.

Focal distances of the micro incident lens 210 and the cylinder lens or curvatures of the micro incident lens 210 and the cylinder lens with respect to the second direction D2 may be equally formed. However, when the focal distance of the micro incident lens 210 is longer than the focal distance of the cylinder lens or the curvature of the cylinder lens is greater than that of the micro incident lens 210, the first and second beam patterns P1 and P2 may form the beam pattern which is narrowed in the second direction D2.

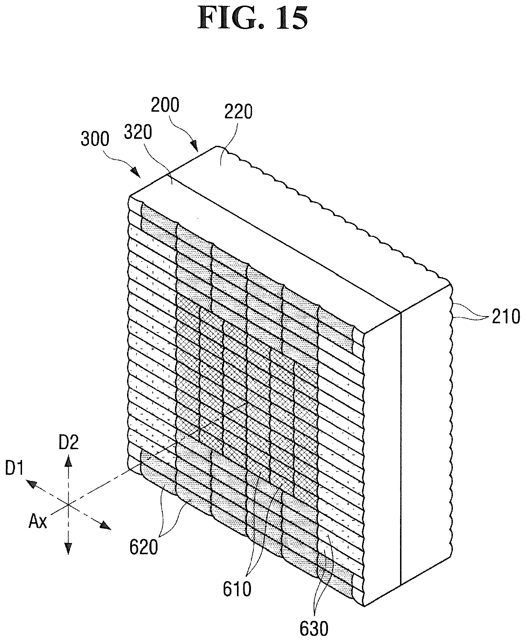

Accordingly, the lamp 1 according to some exemplary embodiments of the present invention may form a beam pattern which is widened in the first direction D1 and narrowed in the second direction D2 by using a combination of the first to third micro incident/exit units 510, 520, and 530. According to other exemplary embodiments of the present invention, when the first to third micro incident/exit units 610, 620, and 630 are combined and arranged in the incident/exit area of the lamp 1 according to FIG. 15 viewed from the direction in which the micro exit lens 310 is formed, a beam pattern, which further is narrowed and has high brightness, may be formed in the high illuminance area A1 of FIG. 10 and a low beam pattern LP which is widened with a relatively wider beam width while forming lower brightness may be formed in the spread areas A2 and A3.

Meanwhile, the shielding portion 400 may be disposed between the first lens portion 200 and the second lens portion 300 and obstruct a portion of light which is incident onto the second lens portion 300 from the first lens portion 200 to form a cut-off line CL of the beam pattern.

In some exemplary embodiments of the present invention, since the lamp 1 may be a headlamp and form the low beam pattern, the shielding portion 400 may form the cut-off line CL as shown in FIGS. 4 and 5.

The shielding portion 400 may include a plurality of shields 410 which are configured to shield a portion of light which is incident onto each of the plurality of micro exit lenses 310.

A top end of each of the plurality of shields 410 may be proximate to a focal point F on a rear side of each of the plurality of micro exit lenses 310 and obstruct a portion of light which is incident onto each of the plurality of exit lenses 310 such that the cut-off line CL, as described with reference to FIG. 10, may be formed.

The plurality of shields 410 may be fixed to and formed on a surface of the second light transmission portion 320, which faces the first lens portion 200, through deposition, coating, or adhesion thereon.

In addition, in some exemplary embodiments of the present invention, since each of the plurality of micro incident lenses 210 may be the cylinder lens, some of the plurality of shields 410, which obstruct a portion of light which exits from any one of the plurality of micro incident lenses 210, may be integrally formed as a single body in the direction in which the cylinder lens extends. However, the present invention is not limited thereto, and each of the plurality of shields 410 may be separately formed and disposed.

In summary, the lamp 1 according to some exemplary embodiments of the present invention may form the beam pattern which satisfies light distribution performance requirements such as brightness, beam width, and light efficiency of a particular region of the beam pattern by adjusting the combination and arrangement of the first to third micro incident/exit units 510, 520, and 530, which form the incident/exit area.

Particularly, when the first micro incident/exit units 510 are arranged in the optical axis area, the second micro incident/exit units 520 may be symmetrically arranged in the second direction D2 with respect to the optical axis Ax, and the third micro incident/exit units 530 may be symmetrically arranged in the first direction D1 with respect to the optical axis Ax in the incident/exit area of the lamp 1 according to some exemplary embodiments of the present invention, a low beam pattern LP, which has a shape widened to be parallel overall to the horizontal line H-H, has relatively high brightness in the high illuminance area A1, and has relatively low brightness in the spread areas A2 and A3, may be formed.

According to the exemplary embodiments of the present invention, a lamp for a vehicle may provide one or more effects as follows. A micro incident lens is a cylinder lens, and a beam pattern, in which the light incident onto the cylinder is widened to be parallel to a line H-H, may be formed such that the costs for configuring micro incident lenses and micro exit lenses arranged to be parallel to a line H-H may be reduced in comparison to configuring general micro lenses.

The beam pattern may satisfy the requirements for the light distribution performance by adjusting a combination and arrangements of incident/exit units which form an incident/exit area of a lamp for a vehicle.

Effects of the present disclosure will not be limited to the above-mentioned effects and other unmentioned effects will be clearly understood by those skilled in the art from the following claims.

It should be understood by one of ordinary skill in the art that the present disclosure can be embodied in other specific forms.

Therefore, the above-described embodiments should be understood to be exemplary and not limiting in every aspect. The scope of the present invention will be defined by the following claims.

## Claims

1. A lamp for a vehicle, comprising:
a light source portion (100);
a first lens portion (200) which includes a plurality of micro incident lenses (210) onto which light generated by the light source portion is incident; and
a second lens portion (300) which includes a plurality of micro exit lenses (310) disposed in front of the plurality of micro incident lenses,
wherein the lamp is configured to form a beam pattern using a combination of one or more micro incident/exit units (510, 520, 530),
wherein each of the micro incident/exit units (510, 520, 530) includes a cylinder lens which extends in a first direction (D1) and a plurality of corresponding lenses that correspond to the cylinder lens,
wherein the micro incident lens (210) is the cylinder lens and the micro exit lens (310) is the corresponding lens,
wherein the plurality of corresponding lenses are arranged in the first direction (D1) in which the cylinder lens extends, and
wherein light which exits from the micro incident lens (210) is adapted to be incident onto the corresponding plurality of micro exit lenses (310),
**characterized in that**
an incident surface of the cylinder lens includes a refraction portion (215) which is bent at both ends of the first direction (D1).

2. The lamp of claim 1, wherein the lamp is configured to have light which exits therefrom form a beam pattern which is widened in the first direction (D1).

3. The lamp of any one of claims 1 or 2, wherein the lamp is configured to have light which exits therefrom form a beam pattern which is narrowed in a second direction (D2) perpendicular to the first direction.

4. The lamp according to any one of claims 1 to 3, wherein the refraction portion (215) is configured such that light which is incident thereon or exits therefrom is narrowed in the first direction (D1).

5. The lamp of any one of the preceding claims, wherein at least two micro incident/exit units (510, 520, 530) of a same configuration are adjacently arranged, in which the cylinder lens is arranged in combination with a same number of the corresponding lenses.

6. The lamp of any one of the preceding claims, wherein the micro incident/exit units include a first group (510) of micro incident/exit units whose cylinder lens is arranged in combination with two corresponding lenses, the first group (510) being arranged in an optical axis area to increase a brightness of a high illuminance region of the beam pattern.

7. The lamp of any one of the preceding claims, wherein the micro incident/exit units include a second group (520, 530) of micro incident/exit units whose cylinder lens is arranged in combination with three or more corresponding lenses, the second group (520, 530) being arranged outside an optical axis area and adapted to form a spread region of the beam pattern.

8. The lamp of any one of the preceding claims, wherein in the first lens portion (200), the plurality of micro incident lenses (210) are formed on a surface of a first light transmission portion (220) that transmits light, which faces the light source portion (100),
wherein in the second lens portion (300), the plurality of micro exit lenses (310) are formed on a surface of a second light transmission portion (320) that transmits light, from which light exits, and
wherein the first light transmission portion (220) and the second light transmission portion (320) are disposed such that mutually facing surfaces abut each other.

9. The lamp of any one of the preceding claims, further comprising a shielding portion (400) which includes a plurality of shields (410) disposed on rear focal points of the plurality of micro exit lenses (310) to obstruct a portion of light which is incident onto the plurality of micro exit lenses (310), the plurality of shields (410) being disposed on and fixed to a surface of the second light transmission portion (320) which faces the first light transmission portion (220).

10. The lamp of claim 8 or 9, wherein the first light transmission portion (220) has a thickness corresponding to a focal distance of the micro incident lens (210), and
wherein the second light transmission portion (320) has a thickness corresponding to a focal distance of the micro exit lens (310).

11. The lamp of any one of the preceding claims, wherein the light source portion (100) comprises:
a light source (110); and
a light guide portion (120) configured to guide the light generated by the light source (110) to the first lens portion (200) by adjusting an optical path of the light to be parallel to an optical axis of the light source (110), and
wherein the light guide portion (120) is one of a Fresnel lens and a collimator lens.

12. The lamp of any one of the preceding claims, wherein the micro incident/exit units (510, 520, 530) include at least two groups, the cylinder lens of the micro incident/exit units of one group having a different number of the plurality of corresponding lenses from those of the other groups.

## Patentansprüche

1. Leuchte für ein Fahrzeug, umfassend:
einen Lichtquellenabschnitt (100);
einen ersten Linsenabschnitt (200), der eine Mehrzahl von Mikroeinfallslinsen (210) umfasst, auf die das von dem Lichtquellenabschnitt erzeugte Licht einfällt, und
einen zweiten Linsenabschnitt (300), der eine Mehrzahl von Mikroaustrittslinsen (310) umfasst, die vor der Mehrzahl von Mikroeinfallslinsen angeordnet sind,
wobei die Leuchte eingerichtet ist, um ein Strahlenmuster unter Verwendung einer Kombination von einer oder mehreren Mikroeinfalls-/-austrittseinheiten (510, 520, 530) zu bilden,
wobei jede der Mikroeinfalls-/-austrittseinheiten (510, 520, 530) eine Zylinderlinse, die sich in einer ersten Richtung (D1) erstreckt, und eine Mehrzahl von korrespondierenden Linsen, die der Zylinderlinse entsprechen, umfasst,
wobei die Mikroeinfallslinse (210) die Zylinderlinse ist und die Mikroaustrittslinse (310) die korrespondierende Linse ist,
wobei die Mehrzahl von korrespondierenden Linsen in der ersten Richtung (D1) angeordnet ist, in der sich die Zylinderlinse erstreckt, und
wobei Licht, das aus der Mikroeinfallslinse (210) austritt, angepasst ist, um auf die Mehrzahl von korrespondierenden Mikroaustrittslinsen (310) einzufallen,
**dadurch gekennzeichnet, dass**
eine Einfallsoberfläche der Zylinderlinse einen Brechungsabschnitt (215) umfasst, der an beiden Enden der ersten Richtung (D1) gebogen ist.

2. Leuchte nach Anspruch 1, wobei die Leuchte eingerichtet ist, um Licht aufzuweisen, das daraus austritt, um ein Strahlenmuster zu bilden, das in der ersten Richtung (D1) aufgeweitet ist.

3. Leuchte nach einem der Ansprüche 1 oder 2, wobei die Leuchte eingerichtet ist, um Licht aufzuweisen, dass daraus austritt, um ein Strahlenmuster zu bilden, das in einer zweiten Richtung (D2) senkrecht zu der ersten Richtung verengt ist.

4. Leuchte nach einem der Ansprüche 1 bis 3, wobei der Brechungsabschnitt (215) eingerichtet ist, so dass Licht, welches darauf einfällt oder davon austritt, in der ersten Richtung (D1) verengt ist.

5. Leuchte nach einem der vorangehenden Ansprüche, wobei wenigstens zwei Mikroeinfalls-/-austrittseinheiten (510, 520, 530) einer gleichen Konfiguration angrenzend angeordnet sind, in der die Zylinderlinse in Kombination mit einer gleichen Anzahl der korrespondierenden Linsen angeordnet ist.

6. Leuchte nach einem der vorangehenden Ansprüche, wobei die Mikroeinfalls-/ -austrittseinheiten eine erste Gruppe (510) von Mikroeinfalls-/-austrittseinheiten umfassen, deren Zylinderlinse in Kombination mit zwei korrespondierenden Linsen angeordnet ist, wobei die erste Gruppe (510) in einem optischen Achsenbereich angeordnet ist, um eine Helligkeit eines Bereichs mit hoher Beleuchtungsstärke des Strahlenmusters zu erhöhen.

7. Leuchte nach einem der vorangehenden Ansprüche, wobei die Mikroeinfalls-/ -austrittseinheiten eine zweite Gruppe (520, 530) von Mikroeinfalls-/ -austrittseinheiten umfassen, deren Zylinderlinse in Kombination mit drei oder mehreren korrespondierenden Linsen angeordnet ist, wobei die zweite Gruppe (520, 530) außerhalb eines optischen Achsenbereichs angeordnet ist und angepasst ist, um einen Streubereich des Strahlenmusters zu bilden.

8. Leuchte nach einem der vorangehenden Ansprüche, wobei in dem ersten Linsenabschnitt (200) die Mehrzahl von Mikroeinfallslinsen (210) auf einer Oberfläche eines ersten Lichtübertragungsabschnitts (220), der Licht überträgt, gebildet ist, der dem Lichtquellenabschnitt (100) zugewandt ist,
wobei in dem zweiten Linsenabschnitt (300) die Mehrzahl von Mikroaustrittslinsen (310) auf einer Oberfläche eines zweiten Lichtübertragungsabschnitts (320), der Licht überträgt, gebildet ist, von dem Licht austritt, und
wobei der erste Lichtübertragungsabschnitt (220) und der zweite Lichtübertragungsabschnitt (320) so angeordnet sind, dass gegenseitig zugewandte Oberflächen aneinanderstoßen.

9. Leuchte nach einem der vorangehenden Ansprüche, weiterhin umfassend einen Abschirmabschnitt (400), der eine Mehrzahl von Abschirmungen (410) umfasst, die an hinteren Brennpunkten der Mehrzahl von Mikroaustrittslinsen (310) angeordnet ist, um einen Abschnitt von Licht zu blockieren, das auf die Mehrzahl von Mikroaustrittslinsen (310) einfällt, wobei die Mehrzahl von Abschirmungen (410) an einer Oberfläche des zweiten Lichtübertragungsabschnitts (320), der dem ersten Lichtübertragungsabschnitt (220) zugewandt ist, angeordnet und befestigt ist.

10. Leuchte nach Anspruch 8 oder 9, wobei der erste Lichtübertragungsabschnitt (220) eine Dicke entsprechend einer Brennweite der Mikroeinfallslinse (210) aufweist, und wobei der zweite Lichtübertragungsabschnitt (320) eine Dicke entsprechend einer Brennweite der Mikroaustrittslinse (310) hat.

11. Leuchte nach einem der vorangehenden Ansprüche, wobei der Lichtquellenabschnitt (100) umfasst:
eine Lichtquelle (110); und
einen Lichtleiterabschnitt (120), der eingerichtet ist, um das von der Lichtquelle (110) erzeugte Licht zu dem ersten Linsenabschnitt (200) durch Anpassen eines optischen Pfads des Lichts zu leiten, um parallel zu einer optischen Achse der Lichtquelle (110) zu sein, und
wobei der Lichtleiterabschnitt (120) entweder eine Fresnellinse oder eine Kollimatorlinse ist.

12. Leuchte nach einem der vorangehenden Ansprüche, wobei die Mikroeinfalls-/ -austrittseinheiten (510, 520, 530) wenigstens zwei Gruppen umfassen, wobei die Zylinderlinse der Mikroeinfalls-/-austrittseinheiten von einer Gruppe eine von denen der anderen Gruppen unterschiedliche Anzahl der Mehrzahl von korrespondierenden Linsen aufweist.

## Revendications

1. Phare de véhicule, comprenant :
une partie de source lumineuse (100) ;
une première partie de lentilles (200) comprenant une pluralité de micro-lentilles incidentes (210), sur laquelle une lumière générée par la partie de source lumineuse est incidente ; et
une deuxième partie de lentilles (300) comprenant une pluralité de micro-lentilles de sortie (310) disposées devant la pluralité de micro-lentilles incidentes,
où ledit phare est configuré de manière à former un motif de faisceau au moyen d'une combinaison d'une ou de plusieurs unités de micro-lentilles incidentes/de sortie (510, 520, 530),
où chacune des unités de micro-lentilles incidentes/de sortie (510, 520, 530) comprend une lentille cylindrique s'étendant dans une première direction (D1) et une pluralité de lentilles correspondantes, lesquelles correspondent à la lentille cylindrique,
où la micro-lentille incidente (210) est la lentille cylindrique et la micro-lentille de sortie (310) est la lentille correspondante,
où la pluralité de lentilles correspondantes sont disposées dans la première direction (D1) où s'étend la lentille cylindrique, et
où la lumière sortant de la micro-lentille incidente (210) est destinée à être incidente sur la pluralité de micro-lentilles de sortie (310) correspondante,
**caractérisé**
**en ce qu'**une surface incidente de la lentille cylindrique comprend une partie de réfraction (215) courbée aux deux extrémités de la première direction (D1).

2. Phare selon la revendication 1, où ledit phare est configuré de telle manière que la lumière en sortant forme un motif de faisceau s'élargissant dans la première direction (D1).

3. Phare selon la revendication 1 ou la revendication 2, où ledit phare est configuré de telle manière que la lumière en sortant forme un motif de faisceau se resserrant dans une deuxième direction (D2) perpendiculaire à la première direction.

4. Phare selon l'une des revendications 1 à 3, où la partie de réfraction (215) est configurée de telle manière que la lumière incidente sur celle-ci ou en sortant se resserre dans la première direction (D1).

5. Phare selon l'une des revendications précédentes, où au moins deux unités de micro-lentilles incidentes/de sortie (510, 520, 530) de configuration identique sont disposées adjacentes l'une à l'autre, la lentille cylindrique étant agencée en combinaison avec un nombre identique de lentilles correspondantes.

6. Phare selon l'une des revendications précédentes, où les unités de micro-lentilles incidentes/de sortie comprennent un premier groupe (510) d'unités de micro-lentilles incidentes/de sortie dont la lentille cylindrique est agencée en combinaison avec deux lentilles correspondantes, ledit premier groupe (510) étant disposé dans une région d'axe optique de manière à accroître la luminosité d'une zone d'éclairage intense du motif de faisceau.

7. Phare selon l'une des revendications précédentes, où les unités de micro-lentilles incidentes/de sortie comprennent un deuxième groupe (520, 530) d'unités de micro-lentilles incidentes/de sortie dont la lentille cylindrique est agencée en combinaison avec au moins trois lentilles correspondantes, ledit deuxième groupe (520, 530) étant disposé en dehors d'une région d'axe optique et destiné à former une zone de diffusion du motif de faisceau.

8. Phare selon l'une des revendications précédentes, où, dans la première partie de lentilles (200), la pluralité de micro-lentilles incidentes (210) est formée sur une surface d'une première partie de transmission lumineuse (220) transmettant la lumière et faisant face à la partie de source lumineuse (100),
où, dans la deuxième partie de lentilles (300), la pluralité de micro-lentilles de sortie (310) est formée sur une surface d'une deuxième partie de transmission lumineuse (320) transmettant la lumière et dont sort la lumière, et
où la première partie de transmission lumineuse (220) et la deuxième partie de transmission lumineuse (320) sont disposées de sorte que des surfaces se faisant face sont en butée l'une contre l'autre.

9. Phare selon l'une des revendications précédentes, comprenant en outre une partie d'écran (400) comprenant une pluralité d'écrans (410) disposés sur des points focaux arrière de la pluralité de micro-lentilles de sortie (310) afin d'occulter une fraction de la lumière incidente sur la pluralité de micro-lentilles de sortie (310), ladite pluralité d'écrans (410) étant disposée sur, et fixée à une surface de la deuxième partie de transmission lumineuse (320) faisant face à la première partie de transmission lumineuse (220).

10. Phare selon la revendication 8 ou la revendication 9, où la première partie de transmission lumineuse (220) a une épaisseur correspondant à une distance focale de la micro-lentille incidente (210), et
où la deuxième partie de transmission lumineuse (320) a une épaisseur correspondant à une distance focale de la micro-lentille de sortie (310).

11. Phare selon l'une des revendications précédentes, où la partie de source lumineuse (100) comprend :
une source lumineuse (110) ; et
une partie de guide de lumière (120) configurée de manière à guider la lumière générée par la source lumineuse (110) vers la première partie de lentilles (200) par ajustement d'un trajet optique de la lumière afin que celui-ci soit parallèle à un axe optique de la source lumineuse (110), et
où la partie de guide de lumière (120) est une lentille de Fresnel ou une lentille de collimation.

12. Phare selon l'une des revendications précédentes, où les unités de micro-lentilles incidentes/de sortie (510, 520, 530) comprennent au moins deux groupes, la lentille cylindrique des unités de micro-lentilles incidentes/de sortie d'un groupe étant en nombre différent de la pluralité de lentilles correspondantes de celles des autres groupes.
